# EUROPÄISCHE PATENTSCHRIFT

(11) **EP 1 423 827 B1**
(45) Veröffentlichungstag und Bekanntmachung des Hinweises auf die Patenterteilung: **11.06.2008**
(21) Anmeldenummer: 02758302.0
(22) Anmeldetag: 03.07.2002
(51) Int. Cl.: G07C 5/00, G07C 3/00

(54) **VORRICHTUNG UND VERFAHREN ZUR FRÜHERKENNUNG UND VORHERSAGE VON AGGREGATESCHÄDIGUNGEN**
DEVICE AND METHOD FOR THE EARLY RECOGNITION AND PREDICTION OF UNIT DAMAGE
DISPOSITIF ET PROCEDE DE DETECTION PRECOCE ET DE PREDICTION DE DETERIORATIONS D'UNITES

(30) Priorität: 07.09.2001 DE 10144076
(43) Veröffentlichungstag der Anmeldung: 02.06.2004
(73) Patentinhaber: Daimler AG, 70327 Stuttgart (DE)
(72) Erfinder: MAYER, C, c/o P.T. DaimlerChrysler Dist. Indonesia, 10002 Jakarta (ID); SCHWARZHAUPT, Andreas, 74420 Oberrot (DE); SPIEGELBERG, Gernot, 71296 Heimsheim (DE)
(86) Internationale Anmeldenummer: PCT/EP2002/007362
(87) Internationale Veröffentlichungsnummer: WO 2003/023721

(56) Entgegenhaltungen:
- DD-A- 214 709
- DE-A- 4 217 067
- US-A- 4 545 250
- US-A- 5 629 864
- RANDALL R B ET AL: "CEPSTRUM ANALYSIS" TECHNICAL REVIEW, BRUEL OG KJAER. NAERUM, DK, Nr. 3, 1981, Seiten 3-44, XP000763132
- DATABASE INSPEC [Online] INSTITUTE OF ELECTRICAL ENGINEERS, STEVENAGE, GB; ZIYE LI ET AL: "Failure diagnosis system by sound signal for automobile engine" Database accession no. 5722574 XP002236125 & PROCEEDINGS OF THE JAPAN-USA SYMPOSIUM ON FLEXIBLE AUTOMATION - 1996, PROCEEDINGS OF 1996 JAPAN-USA SYMPOSIUM ON FLEXIBLE AUTOMATION, BOSTON, MA, USA, 7-10 JULY 1996, Seiten 427-432 vol.1, 1996, New York, NY, USA, ASME, USA ISBN: 0-7918-1231-6
- R. B. RANDALL: "Cepstrum analysis and gearbox fault diagnosis" MAINTENANCE MANAGEMENT INTERNATIONAL , 1982 - 1983, Seiten 183-208, XP008015538 Manchester UK

## Beschreibung

Die Erfindung betrifft eine Vorrichtung und ein Verfahren zur Früherkennung und Vorhersage von Aggregateschädigungen nach dem Oberbegriff von Anspruch 1, 10 bzw. 11.

Zur Bestimmung von Wartungs- bzw. Servicezeitpunkten für Kraftfahrzeuge sind im Stand der Technik eine Vielzahl von Verfahren und Vorrichtungen bekannt.

Beispielsweise offenbart die DE 3110774 A1 ein Verfahren zur Ermittlung von Wartungs- und Pflegedienstintervallen, bei dem in Abhängigkeit von Verschleißzuständen der zu wartenden Betriebsgrößen der Wartungszeitpunkt fortlaufend ermittelt wird. Hierzu wird entweder nur eine Führungsgröße, wie beispielsweise die Schmierfähigkeit des Motoröls oder der Zustand der Bremsbeläge, herangezogen, oder es werden weitere Verschleißzustände anderer Betriebsgrößen, wie z.B. Kupplung, Vergasereinstellung, Zündkerzen, Zündzeitpunkt, usw. erfasst und bei der Berechnung des Wartungszeitpunkts mit berücksichtigt. Der extrapolierte Wartungszeitpunkt wird dem Fahrer über eine Anzeige mitgeteilt.

Darüber hinaus ist aus der DE 43 06 270 C1 ein Verfahren zur Ermittlung und Verlängerung eines Wechselintervalls eines Aggregates anhand mindestens eines direkt oder indirekt erfassten, den Qualitätszustand des Betriebsstoffes repräsentierenden Betriebswertes bekannt. Die Auswertung des mindestens einen Betriebswertes und die kontinuierliche Berechnung des Wechselintervalls erfolgt zudem unter Berücksichtigung von weiteren Sensordaten, die Betriebswerte wie Anzahl der Starts, Anzahl der Kurbelwellenumdrehungen, Motortemperatur, Motoröldruck, usw. darstellen, mittels einer Rechen- und Steuereinheit und wird in Bezug zu einem vorgegebenen Aggregate-Wartungsintervall gesetzt.

Schließlich ist aus EP 0 489 261 A2 eine Vorrichtung zur Berechnung eines Kraftfahrzeug-Wartungsintervalls anhand verschiedener erfasster bzw. ermittelter Betriebswerte wie Startanzahl, Kurbelwellenumdrehungen, Fahr- und Standzeiten, Motortemperatur, Motoröldruck, Ladeluftdruck, Ölverbrauch, Kraftstoffverbrauch und dergleichen bekannt. Das Berechnungsergebnis wird akustisch und/oder optisch als Wartungsanzeige/-anweisung ausgegeben. Ein Motoröl-Nachfüllvorgang wird mengenmäßig erfasst und daraufhin wird das Wartungsintervall einmalig um einen definierten Zeitraum bzw. eine definierte Kilometerleistung verlängert.

Darüber hinaus offenbart die EP 0 601 365 B1 ein Verfahren und eine Vorrichtung zum Ermitteln des Service-Zeitpunktes für ein Kraftfahrzeugbremssystem. Hierbei wird für jedes Rad die Drehzahl und die Fahrzeuggeschwindigkeit bestimmt und daraus der Radschlupf berechnet und gespeichert. Wenn eine Differenz zwischen dem Radschlupf verschiedener Räder größer als ein vorgegebener Wert wird, dann wird ein Bremsproblemsignal erzeugt, auf das ansprechend das Wartungserfordernis angezeigt wird.

Bei diesen herkömmlichen Verfahren werden somit maximal auf einer elektronischen Überwachungsseite durch Auswertung von Sensorik erhaltene Daten ausgewertet und in der Funktionalität der Ursache zugeordnet, wobei der Servicezeitpunkt entsprechend bestimmt wird.

Jedoch ist bei diesen herkömmlichen Verfahren keine prädiktive, d.h. vorausschauende Diagnose möglich. Ein Servicezeitpunkt wird lediglich anhand von bereits vorliegenden Fehlern aus Sensordaten bestimmt, d.h. wenn bereits ein Fehler vorliegt. Somit erfolgt nur eine Fehlerdiagnose.

Jedoch sind auch Verfahren bekannt, bei denen ein Serviceintervall vorausschauend und flexibel bestimmt wird.

Aus der WO 99/24699 ist beispielsweise ein Verfahren und eine Vorrichtung zum Überwachen und/oder Ermitteln von Motorölqualität bekannt, bei dem Änderungen in der Viskosität des Öls in Abhängigkeit von Temperatur und Motorreibmoment ermittelt und ausgewertet werden. Dazu ist eine Steuereinheit zum Bearbeiten und Umformen aufgenommener Daten sowie mindestens eine Speichereinheit ausgebildet, wobei in der oder jeder Speichereinheit zur Bestimmung der Viskosität notwendige Kennlinien abgelegt sind. Abhängig von diesen Viskositätsdaten wird der Wechselzeitpunkt des Motoröls derart bestimmt, dass keine Schädigungen des Motors aufgrund von unzureichender Schmierung und Kühlung auftreten.

Weiterhin offenbart die EP 1101971 A1 eine Diagnose des Zustands von Bauteilen, die einem kontinuierlichen Verschleiß unterliegen, wie z.B. beispielsweise Bremsbelägen. Hierbei wird der Verschleißzustand mit Sensoren erfasst und ein Alarm ausgegeben, wenn ein vorbestimmter Wert unterschritten wird.

Aus der EP 0764244 B1 ist ein Bremsbelagverschleiß-Meßsystem bekannt, bei dem mittels eines Verschiebungssensors der Verschleiß erfasst wird. In diesem System wird erfasst, wenn ein neuer unbenutzter Bremsbelag verwendet wird, und dann wird entsprechend ein neuer Referenzwert für Verschleißmessungen generiert. Anschließend wird ansprechend auf den neuen Referenzwert eine Verschleißgrenze generiert und gespeichert, die eine akzeptable Mindestbremsbelagsdicke repräsentiert und durch Subtrahieren der bekannten Dicke neuer, unbenutzter Beläge von dem neuen Referenzwert erhalten wurde. Auf diese Weise berücksichtigt das System bei der Ermittlung der Verschleißgrenze die abnehmende Scheiben- oder Trommeldicke mit fortschreitender Lebensdauer der Bremse. Durch den Verschleißverlauf der Vergangenheit und der Restbelagdicke wird die zu erwartende Restlaufstrecke prognostiziert und über ein Servicediagnosesystem ausgegeben.

Diese Verfahren ermöglichen jedoch ebenfalls nur eine Voraussage über den Alterungszustand der zu wechselnden Schmierstoffe sowie dem Verschleiß unterliegender Teile wie Bremsbeläge und Kupplungsbelag.

Der Zustand der rein mechanischen Bauteile eines Aggregates ist durch diese herkömmlichen Verfahren jedoch nur ansatzweise und ungenügend bestimmbar.

Dahingegen sind Verfahren zur Schadensfrüherkennung beispielsweise auf dem Gebiet der Kraftwerkstechnik bzw. für die Maschinenüberwachung großer Anlagen bekannt.

Aus der Notwendigkeit, außerplanmäßige Stillstandzeiten von großen Kraftwerksanlagen aufgrund plötzlich ausfallender Bauteile vermeiden zu müssen, wurden Verfahren entwickelt, die eine Schadensfrüherkennung von Aggregatebauteilen zulassen, ohne dass das Bauteil hierfür schon eine auffallende Funktionsstörung zeigen muss. Aufgrund der durch diese Verfahren ermittelten Ergebnisse lässt sich dann die Entscheidung ableiten, ob ein bestimmtes Bauteil im nächsten geplanten Maschinenstillstand zur Wartungsdurchführung ersetzt werden muss oder noch weiter im Einsatz bleiben kann.

Die DE 195 45 008 C2 offenbart ein Verfahren zur Überwachung von periodisch arbeitenden Maschinen zur Früherkennung von Maschinenveränderungen. Dazu werden mittels eines Überwachungssensors maschinenspezifische Messsignale erfasst, die in einer Auswerteeinheit mit einer Referenz, d.h. Messsignalen, die das Ausgangsverhalten einer neuen Maschine darstellen, verarbeitet werden. Insbesondere wird aus den vom Sensor gelieferten Zeitsignalen mittels Fourier-Transformation für den Maschinenzyklus ein Frequenzspektrum erstellt und aus den Frequenzsignalen von mindestens zwei, vorzugsweise mindestens zehn Frequenzspektren Mittelwerte der einzelnen Frequenzordnungen errechnet, die die Grundlage des Verfahrens für die Überwachung bilden. Eine erfasste Änderung kann ein Signal für eine Unregelmäßigkeit in einem Fertigungsprozess, das eine Verhaltensänderung der Maschine zur Folge hat, und/oder für das Eintreten eines Maschinenschadens sein. Diese Maschinenänderung wird angezeigt.

Aus der EP 0413845 B1 ist ein Verfahren zur Schadensfrüherkennung an Maschinenteilen, insbesondere an Wälzlagern bekannt. Bei diesem Verfahren werden erzwungene Schwingungen einer Maschine aufgrund eines Wälzlagerschadens mit Hilfe eines Schwingungsaufnehmers erfasst. Aus diesem gemessenen Signal, beispielsweise der gemessenen Beschleunigung, wird ein digitalisiertes Signal erzeugt und in periodisch determinierte Signalanteile, in periodisch wiederkehrende Anteile mit stochastischer Amplitude und in allgemein stochastische Anteile zerlegt. Anschließend werden diese Signalanteile zur Ermittlung von Kenngrößen für die Beanspruchung des Maschinenteils frequenzabhängig analysiert. Dazu wird das Frequenzspektrum, vorzugsweise als spektrale Leistungsdichte ermittelt. Mittels Häufigkeitsanalysen werden schadenbestimmende Intensitäten für die bestimmten Frequenzbereiche bestimmt, wobei Größe, Umfang und Form der Häufigkeitsverteilung ermittelt werden. Eine Verknüpfung von Frequenzbereich und Häufigkeitsverteilung ergibt einen Beanspruchungsfaktor für das Wälzlager. Die ermittelten Beanspruchungs-Kenngrößen werden zur Feststellung der Schadensart herangezogen und/oder zur Feststellung eines Schädigungsgrades mit Kennwerten für eine ertragbare Beanspruchung des Maschinenteils verglichen.

Aus der DD-A-214709, der als nächstliegender Stand der Technik angesehen wird, ist eine Cepstrum Analyse für die Überwachung von Regelelementantrieben in Kernreaktoren bekannt. Mit einem piezoelektrischen Beschleunigungsaufnehmer werden die Fahrgeräusche der Regelantriebe aufgezeichnet, Schmalband gefiltert und daraus das Leistungsdichtespektrum sowie das Cepstrum berechnet. Die Funktionswerte des Spektrums bzw. des Cepstrums werden dann bei typischen Frequenzen bzw. Quefrenzen, die bei Betätigung der Regelantriebe auftreten, untersucht und mit Vorgaben aus statistischen Verteilungen verglichen. Aus dem Vergleich wird auf das Verhalten des Regelantriebes geschlossen. Das in der DD-A-214709 offenbarte verfahren hat den Vorteil, das die Regelantriebe im wesentlichen nur die beiden Zustände aktiv und inaktiv haben, wodurch sich die Anzahl der möglichen charakteristischen Frequenzen sehr in Grenzen hält. Man kann bereits bei Auftreten der charakteristischen Frequenzen auf den Zustand aktiv schließen. Bei Regelantrieben in Kernkraftwerken ist das die wichtigste Information. Eine genauere Unterscheidung hinsichtlich des Grades der Dynamik der Regelantriebe ist nicht erforderlich und nicht vorgesehen. Würden die Regelantriebe in ihrem Grad an Dynamik stark variieren, hätte das auch Einfluss auf die typischer Weise auftretenden Frequenzen. In unterschiedlichen dynamischen Graden steht zu vermuten, das sich auch die für die Auswertung erforderlichen typischen Frequenzen verändern. Die DD-A-214709 offenbart keine Hinweise, wie mit einem solchen Problem umzugehen wäre. Für Fahrzeuge ist das Verfahren daher nicht geeignet.

Jedoch ist bisher keine Vorrichtung und kein Verfahren bekannt, mittels derer eine Früherkennung und Vorhersage bei instationären, d.h. mobilen Aggregaten verwirklicht werden kann. Insbesondere sind die vorstehend erläuterten herkömmmlichen Vorrichtungen und Verfahren nicht zur Verwendung bei Aggregaten ausgebildet, die dynamischen Belastungsverläufen unterliegen und mobil betrieben sind.

Daher ist es Aufgabe der vorliegenden Erfindung, eine Vorrichtung und ein Verfahren zur Früherkennung und Vorhersage von Aggregateschädigungen zu schaffen, das auch bei Aggregate anwendbar ist, die mobil betrieben werden und dynamischen Belastungsverläufen unterliegen.

Erfindungsgemäß wird diese Aufgabe durch eine Vorrichtung bzw. ein Verfahren mit den Merkmalen des Patentanspruchs 1, 10 bzw. 11 gelöst.

In den Unteransprüchen sind vorteilhafte Weiterbildungen der Erfindung angegeben.

Durch die erfindungsgemäße Vorrichtung bzw. erfindungsgemäße Verfahren wird eine Früherkennung und Vorhersage von Aggregateschädigungen auch bei mobil betriebenen und dynamischen Belastungsverläufen unterliegenden Aggregaten möglich.

Diese und weitere Aufgaben, Merkmale und Vorteile der Erfindung werden aus der nachstehenden Beschreibung eines bevorzugten Ausführungsbeispiels in Verbindung mit der Zeichnung ersichtlich.

Es zeigen:
Fig. 1 ein Blockschaltbild einer erfindungsgemäßen Vorrichtung zur Früherkennung und Vorhersage von Maschinenschädigungen für stationäre und mobil betriebene Maschinenanlagen,
Fig. 2a und 2b ein Ablaufdiagramm für das erfindungsgemäße Verfahren zur Früherkennung und Vorhersage von Aggregateschädigungen und
Fig. 3a und 3b Darstellungen von Spektrum und Cepstrum eines Rädergetriebes bei eingelegtem 1.Gang ohne bzw. mit Aggregateschädigungen.

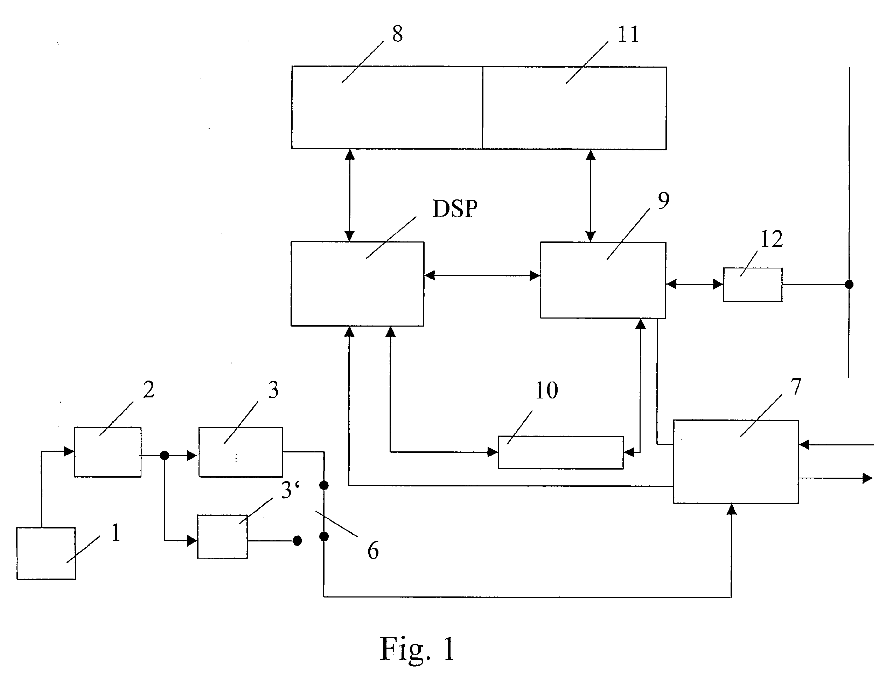

Im folgenden wird nun unter Bezugnahme auf Fig. 1 eine Vorrichtung zur Früherkennung und Vorhersage von Aggregateschädigungen, die insbesondere auch bei mobil betriebenen Maschinenanlagen, wie beispielsweise Antriebssträngen, verwendet werden kann, beschrieben. Es können Schädigungen des Antriebsstrang bzw. von Antriebsstrangkomponenten, wie beispielsweise Lenkung, Motor, Getriebe, Kurbelwelle, Bremsanlage, Retarder, usw. erkannt werden.

In der erfindungsgemäßen Vorrichtung zur Früherkennung und Vorhersage von Aggregateschädigungen ist ein Sensor 1, beispielsweise ein Beschleunigungsaufnehmer, an der zu überwachenden Maschinenanlage angeordnet. Dieser Sensor 1 dient zur Erfassung von Körperschall der zur überwachenden Maschinenanlage und ist an seinem Ausgang mit einer Verstärkungseinrichtung 2 verbunden. Der Ausgang der Verstärkungseinrichtung 2 wiederum ist sowohl mit einer Hüllkurvenbildungseinrichtung 3 als auch über eine Tiefpassfiltereinrichtung 3'. Der Ausgang der Hüllkurvenbildungseinrichtung 3 ist mit einer ersten Schaltposition einer Umschalteinrichtung 6 verbunden. Während der Ausgang der Tiefpassfiltereinrichtung 3' mit einer zweien Schaltposition der Umschalteinrichtung verbunden ist. Der Ausgang der Umschalteinrichtung 6 ist wiederum mit einem Eingang einer Wandler- und Treibereinrichtung 7 verbunden, die unter anderem eine IO(Eingabe-Ausgabe)-Management-A/D(Analog/Digital)-Wandlereinrichtung und Treiberstufen für eine Aggregatesteuerung umfasst. Weitere Eingänge der Wandler- und Treibereinrichtung 7 sind mit nicht gezeigten Aggregatesensoren und Aktuatoren der Maschinenanlage verbunden. Ein Ausgang der Wandler- und Treibereinrichtung 7 ist mit einem digitalen Signalprozessor DSP zur Zufuhr eines durch IO-Management-A/D-Wandlereinrichtung der Wandler- und Treibereinrichtung 7 digitalisierten Sensorsignals verbunden. Der digitale Signalprozessor DSP weist eine Fast-Fourier-Transformationseinrichtung (FFT-Einrichtung) und eine Cepstrum-Analyseeinrichtung zur Erzeugung von Resonanzdaten von Einzelstoßimpulsen im Zeitbereich auf. Hierfür umfasst die Cepstrum-Analyseeinrichtung eine Logarithmierungseinrichtung zur Logarithmierung der von Einzeldaten und eine inverse Fast-Fourier-Transformationseinrichtung (IFFT-Einrichtung). Ein Anschluss des digitalen Signalprozessors DSP ist mit einer Speichereinrichtung 8 verbunden. In dieser Speichereinrichtung 8, die beispielsweise ein EEPROM aufweist, sind Referenzdaten gespeichert, die ein Muttercepstrum sowie Informationen, welche Amplitudenüberhöhungen im Cepstrum eine Schädigung welches Aggregates bzw. Aggregatteils darstellen, umfassen, und kann in eine Speichereinrichtung 11 für eine Aggregatesteuerung integriert sein. An einem weiteren Eingang ist der digitale Signalprozessor DSP mit einer Zentraleinheit 9 bzw. CPU der Aggregateelektronik zur Zuführung von gegenwärtigen Drehzahl- und Lastinformationen verbunden.

Der digitale Signalprozessor DSP sowie die Zentraleinheit 9 sind beide mit einer Überwachungseinrichtung bzw. Watchdog-Einrichtung 10 zum Auslesen von Daten aus dem digitalen Signalprozessor und/oder der Zentraleinheit 9 zur Beurteilung, ob kritische Werte überschritten werden, d.h. Signale auftreten, die außerhalb eines vorbestimmten Toleranzbereichs liegen, und zur Ausgabe eines Beurteilungsergebnisses verbunden. Darüber hinaus ist ein weiterer Ausgang des digitalen Signalprozessors mit der Zentraleinheit 9 zur Ausgabe von Diagnosedaten, d.h. Daten betreffend bevorstehende Aggregateschädigungen, ausgebildet.

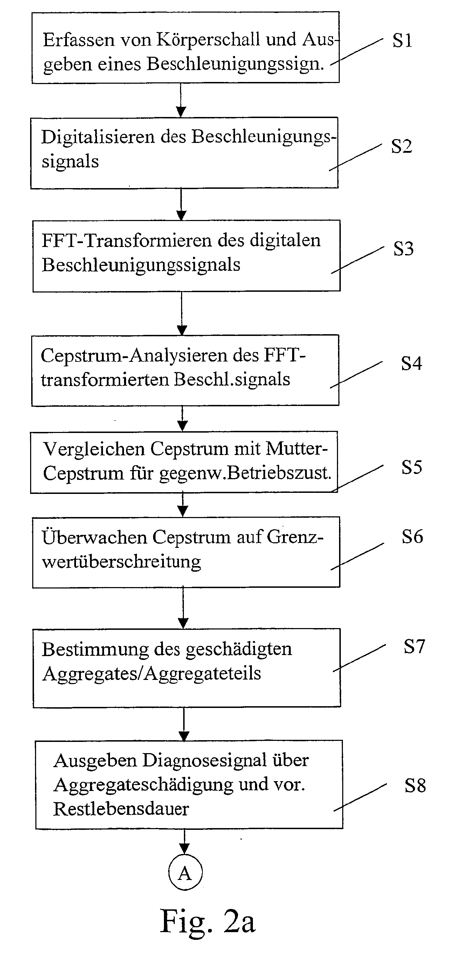

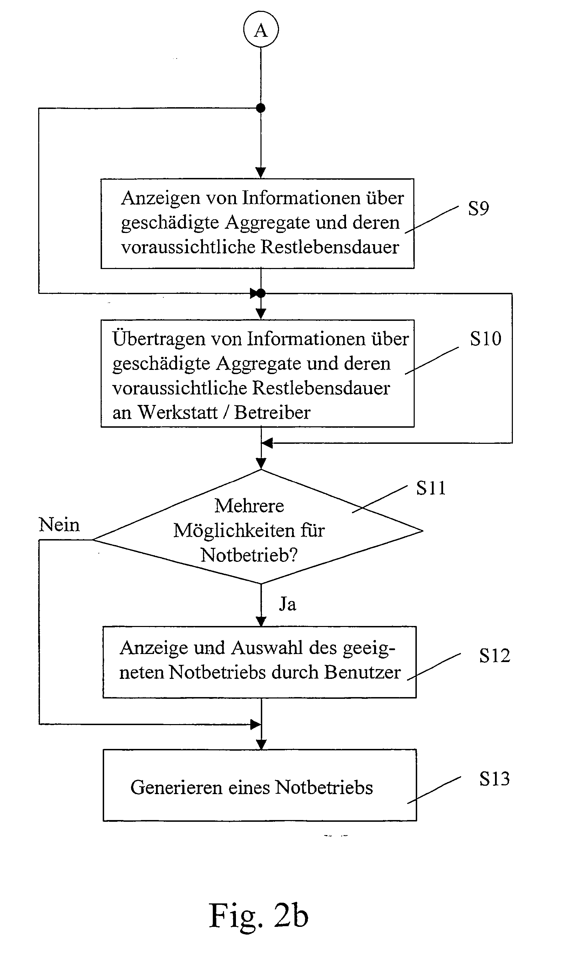

Im folgenden wird nun die Funktionsweise der vorstehend beschriebenen Vorrichtung zur Früherkennung und Vorhersage von Aggregateschädigungen an Hand des in Fig. 2 gezeigten Ablaufdiagramm veranschaulicht.

Zunächst erfasst zumindest ein Sensor 1 den Köperschall einer zu überwachenden Maschinenanlage und gibt ein Messsignal, beispielsweise ein Beschleunigungssignal aus (S1). Das Messsignal von der Sensoreinrichtung 1 wird dann der Verstärkungseinrichtung 2 zugeführt und dort derart verstärkt, dass eine problemlose Weiterverarbeitung in den noch folgenden Verarbeitungseinrichtungen erfolgen kann. Im Rahmen dieser Verstärkung werden jedoch sowohl das gewünschte Signal der zu überwachenden Maschinenanlage als auch Rauschsignale, die sich u.a. bedingt durch die Bewegung der Maschinenanlage bei mobilen Maschinenanlagen entstehen, beispielsweise durch Bodenunebenheiten, Beschleunigungs- und Bremsvorgänge, usw. eines Fahrzeugs im Antriebsstrang entstehende Schwingungssignale verstärkt und würden bei direkter Auswertung die Auswertungsergebnisse des digitalen Signalprozessors DSP negativ beeinflussen.

Daher wird anschließend das von der Verstärkungseinrichtung 2 ausgegebene verstärkte Messsignal einer Hüllkurvenbildungseinrichtung 3 zugeführt, die eine Hüllkurve über das Messsignal erzeugt, um das hochfrequente Messsignal für die Weiterverarbeitung zu glätten. Hierbei verläuft die Hüllkurve entlang der Maximal-Amplitudenwerte des Messsignals. Das Ausgangssignal der Hüllkurvenbildungseinrichtung 3 wird dann der Wandler- und Treibereinrichtung 7 zugeführt.

Alternativ kann ansprechend auf ein Signal von dem digitalen Signalprozessor DSP das Messsignal auch einer Tiefpassfiltereinrichtung 3' zugeführt werden, in der hochfrequente Anteile des Sensorsignals, beispielsweise auch unerwünschte, hochfrequente Rauschanteile herausgefiltert werden. Im Unterschied zum durch die Hüllkurvenbildungseinrichtung 3 erzeugten geglätteten Sensorsignal ist das tiefpassgefilterte Messsignal ein geglätteter Mittelwert des hochfrequenten Messsignals.

Dieses tiefpass-gefilterte Ausgangssignal oder geglättete Messsignal wird dann in der IO-Management-A/D-Wandlereinrichtung der Wandler- und Treibereinrichtung 7 zusammen mit durch nicht gezeigte Aggregatesensoren erfasste, einem anderen Eingang der Wandler- und Treibereinrichtung 7 zugeführten Drehzahl- und Lastsignalen einer ebenfalls in der Wandler- und Treibereinrichtung 7 ausgebildeten Analog/Digitalwandlereinrichtung zugeführt und darin in ein digitales Signal umgewandelt (S2).

Die digitalen Ausgangssignale der Analog/Digitalwandlereinrichtung der Wandler- und Treibereinrichtung 7 werden anschließend dem digitalen Signalprozessor DSP zugeführt. Der digitale Signalprozessor DSP führt eine Signalanalyse durch, bei der Merkmale oder Ereignisse des Maschinenzustands anhand von Schwingungsbändern vorhergesagt werden. Dies kann für alle Maschinenbestandteile erfolgen, deren Körperschall sich über die Maschinenstruktur bis zum Sensor 1 überträgt.

Die dem digitalen Signalprozessor DSP zugeführten digitalen Ausgangssignale der Analog/Digitalwandlereinrichtung der Wandler- und Treibereinrichtung 7 werden zunächst in einer Fast-Fourier-Transformationseinrichtung mittels der schnellen bzw. Fast-Fourier-Transformation in den Frequenzbereich transformiert (S3). Dadurch wird ein Datensatz erzeugt, mit dem graphische Analysen hergestellt werden können. Einzelne Frequenzlinien und die Art der Ausprägung der Harmonischen können bei genau definierten Messbedingungen ursachenbezogene Aussagen für Aggregate bedingen. Schädigungsbedingt steigen Frequenzlinien immer höher an. Bedingt durch den mobilen Einsatz der Maschinenanlage existiert jedoch eine Vielzahl von Störfrequenzlinien, die eine weitere Auswertung verkomplizieren.

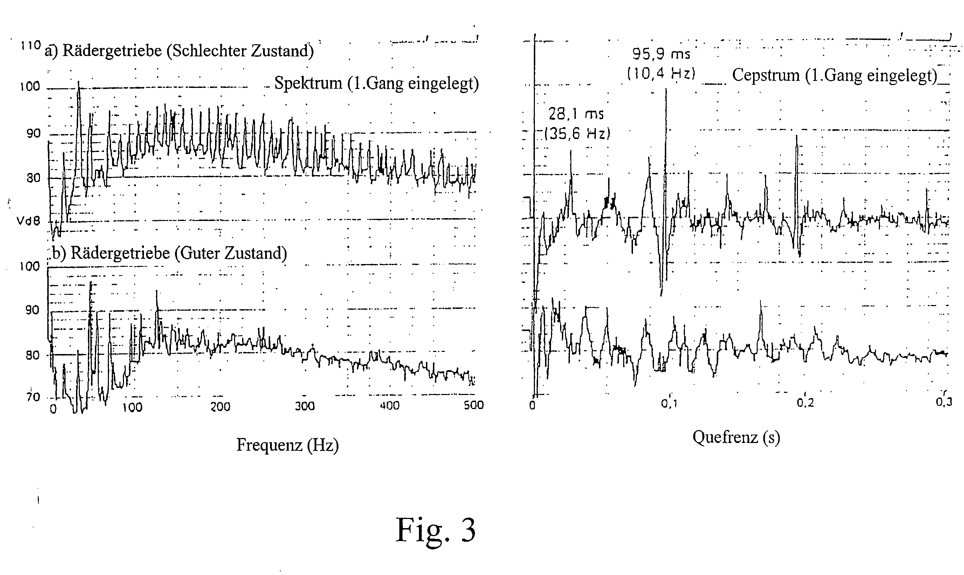

Daher wird durch die im digitalen Signalprozessor DSP ausgebildete Cepstrum-Analysevorrichtung eine drehzahlunabhängige, ursachenbezogene Frequenzanalyse durchgeführt (S4). Zu diesem Zweck führt die in der Cepstrum-Analysevorrichtung ausgebildete Logarithmiereinrichtung nach Durchführung der Fast-Fourier-Transformation in der Fast-Fourier-Transformationseinrichtung eine Logartihmierung der Einzeldaten im Frequenzbereich durch. Diese logartihmierten Einzeldaten werden anschließend mittels der Inversen-FFT(Fast-Fourier-Transformations)-Einrichtung wieder in den Zeitbereich transformiert und stehen dort dann als Resonanzdaten der Einzelstoßimpulse auf der Quefrenzachse, d.h. Umkehr-Frequenzachse, in der Einheit ms zur Verfügung. In Fig. 3a und 3b sind Darstellungen von Spektrum und Cepstrum eines Rädergetriebes bei eingelegtem 1.Gang mit (Fig. 3a) bzw. ohne (Fig. 3b) Aggregateschädigungen gezeigt. Auf der rechten Seite von Fig. 3a bzw. Fig. 3b ist jeweils das ermittelte Spektrum gezeigt, während auf der rechten Seite das Cepstrum dargestellt ist. Hieraus ist ersichtlich, dass aus dem Cepstrum Schädigungen, hier beispielsweise durch Einzelstoßimpulse bei 28,1 ms (35,6 Hz) und 95,9 ms (10,4 Hz) auf einfache Weise eindeutig bestimmt werden können. Mittels der hinterlegten Referenzdaten ist nun aus der Lage der Einzelstoßimpulse ein Rückschluss auf den geschädigten Aggregatebestandteil möglich.

Der Vorteil der Cepstrum-Analyse besteht darin, dass Wiederholungen im Spektrum, beispielsweise durch Harmonische oder Seitenbänder, nur eine Linie im Cepstrum ergeben, wenn nur ein Seitenbandabstand vorliegt. Daher werden sehr viele Linien im Spektrum, die nur wenige Ursachen haben, wesentlich reduziert. Insbesondere ist dies bei Spektren beispielsweise eine defekten Wälzlagers, Zahnschäden an Getrieben, usw. sinnvoll, da in diesen Fällen sehr viele Spektrallinien auftreten, deren einzelne Abstände nicht mehr einfach zu erkennen und aufwendig auszuwerten sind; durch die Cepstrum-Analyse werden die Informationen auf das Wesentliche reduziert.

Der digitale Signalprozessor DSP greift in Abhängigkeit von den durch die Zentraleinheit 9 zugeführten Drehzahl- und Lastinformationen auf in der Speichereinrichtung 8 gespeicherte Referenzdaten für den gegenwärtigen Betriebszustand zu und liest sie aus und führt einen Vergleich zwischen den gespeicherten Referenzdaten, d.h. dem Muttercepstrum, das für eine unbeschädigte Maschinenanlage für verschiedene Betriebszustände ermittelt wurde, und dem derzeitigen Cepstrum durch (S5). Eine mit dem digitalen Signalprozessor DSP verbundene Watchdog-Einrichtung 10, die ebenfalls mit der Zentraleinheit 9 verbunden ist, ermittelt, ob beim Vergleichsergebnis kritische Werte überschritten werden, d.h. Signale auftreten, die im gegenwärtigen Betriebszustand außerhalb eines vorbestimmten Toleranzbereichs liegen, und gibt im Falle einer Überschreitung ein entsprechendes Signal an den digitalen Signalprozessor DSP aus (S6). Zu diesem Zeitpunkt, an dem ein Überschreiten eines Toleranzbereichs erkannt wurde, ist jedoch ein Austausch des betroffenen Teils meist noch nicht erforderlich, ein beginnender Schädigungsgrad kann jedoch bereits festgestellt werden.

Anschließend wird aus in der Speichereinrichtung 8 hinterlegten Erfahrungswerten, die durch die Ermittlung von Cepstren über die gesamte Lebensdauer einer Maschinenanlage und Zuordnung von Veränderungen im Cepstrum zu bestimmten, aufgetretenen Schädigungen eines Aggregats oder Aggregateteils sowie der danach noch verbliebenen Lebensdauer bis zum Totalausfall erhalten wurden, wird nun aus dem im Cepstrum auftretenden Überschreitungen des Toleranzbereichs und der Höhe der Überschreitung sowohl das geschädigte Aggregat bzw. Aggregateteil und dessen Schädigungsgrad als auch dessen voraussichtlich noch verbleibende Lebensdauer durch den digitalen Signalprozessor DSP bestimmt. Zur Bestimmung der voraussichtlich noch verbleibenden Lebensdauer wird zusätzlich zu den bekannten Erfahrungswerten auch die Historie der zu überwachenden Maschinenanlage, beispielsweise Extrembelastung während erst kurzer Lebensdauer, moderate Belastung über einen langen Zeitraum, u.ä., berücksichtigt, da sich dann die voraussichtlich noch verbleibende Lebensdauer verkürzen bzw. verlängern kann. Daraufhin wird vom digitalen Signalprozessor DSP ein Diagnosesignal an die Zentraleinheit 9 ausgegeben, das Informationen enthält, welche Aggregate welche Schädigung und mit welchem Schädigungsgrad, beispielsweise Angabe des Schädigungsgrads eines bestimmtes Zahnrades im Getriebe, aufweisen und wann spätestens ein Wechsel erfolgen muss, um einen Ausfall zu vermeiden (S7).

Die Zentraleinheit 9 generiert ansprechend auf das Diagnosesignal (die Diagnosedaten) einen Notbetrieb (S12) und es werden Meldungen auf einer nicht gezeigten Anzeige- und Bedieneinrichtung ausgegeben (S8). Insbesondere wird ansprechend auf die Diagnosedaten eine Meldung an den Fahrer des Fahrzeugs (S8) und/oder per Telemetrie an die entsprechende Werkstatt und das Fuhrunternehmen abgegeben (S9). Diese Meldung beinhaltet eine für den Fahrer verständliche Darstellung des erkannten bzw. vorhergesagten Fehlers und eine Vorhersage der Zeit bis zum Ausfall oder einer stärkeren Schädigung des entsprechenden Aggregates.

Es kann jedoch auch der Fall auftreten, dass keine Meldung erfolgt und auch keine Wahlmöglichkeit für einen Notbetrieb besteht, dann werden diese Daten nur einer Fehlerspeichereinrichtung, die beispielsweise in der Speichereinrichtung 11 für die Aggregatesteuerung ausgebildet sein kann, zum Auslesen während eines nachfolgenden Kundendiensttermins abgespeichert.

Der durch die Zentraleinheit 9 ansprechend auf die ermittelten Diagnoseinformationen generierte Notbetrieb wird eingesetzt, um die weitere Schädigung des als geschädigt diagnostizierten Aggregates zu verhindern oder vermindern und dennoch gleichzeitig eine weitere Verfügbarkeit des Fahrzeugs zu gewährleisten. Ein solcher Notbetrieb ist beispielsweise das Überspringen des entsprechenden Gangs bei einer Getriebeschädigung oder die Verminderung der Motorleistung / Motordrehzahl. Hierfür sind Notlaufalgorithmen beispielsweise in der Speicheeinrichtung 11 für die Aggregatesteuerung abgelegt, die dann entsprechend von der Zentraleinheit 9 gestartet werden.

Stehen verschiedene Möglichkeiten zum Notbetrieb mit verschiedenen Auswirkungen, z.B. längere oder kürzere Verfügbarkeit des Fahrzeugs, zur Verfügung (S10), werden diese durch die Zentraleinheit 9 auf der nicht gezeigten Anzeige- und Bedieneinrichtung zur Auswahl angezeigt (S11). Der Fahrer kann dann je nach Situation, beispielsweise Entfernung zur Werkstatt oder Zeitraum / Strecke, in dem / der das Fahrzeug noch benötigt wird, einen Notmodus auswählen.

Beispielsweise kann bei einem erkannten Ausfall des Retarders dieser abgeschaltet werden and die Bremsanlage derart angesteuert werden, dass sie die Funktion des Retarders mit übernimmt.

Umgekehrt kann bei einem Ausfall der Brems, durch geänderte Ansteuerung die Funktion der Bremse durch den Retarder mit übernommen werden.

Außerdem werden die aufbereiteten Diagnosedaten des Antriebsstrangs über eine Antriebsstrangschnittstelle zur weiteren Verwendung / Verarbeitung zur Verfügung gestellt.

Durch Kommunikation mit bereits bisher vorhandenen Einrichtungen der Maschinenanlage, wie beispielsweise der Zentraleinheit 9 und damit verbundener Nutzung Maschinenanlagen-spezifischer Kommunikationsstrukturen, wie beispielsweise beim Fahrzeug von CAN(= car area network)-Bausteinen wird der Aufwand der Vorrichtung erheblich reduziert.

Durch die erfindungsgemäße Vorrichtung sowie das erfindungsgemäße Verfahren zur Früherkennung und Vorhersage von Aggregateschädigungen wird die Verfügbarkeit von Maschinenanlagen aufgrund von zustandsabhängiger Wartung erhöht. Es werden nur noch Bauteile ausgetauscht, die Schädigungen aufweisen. Ein vorbeugender Austausch mit dem Risiko, etwas kaputt zu reparieren, entfällt. Die meisten Reparaturzeiten können in die normalen Stillstandzeiten gelegt werden.

Alternativ zur Cepstrum-Analyseeinrichtung kann erfindungsgemäß auch eine Wavelet-Analyseeinrichtung verwendet werden. Hierfür wird ein zu vergleichende Signal mit einem Wavelet, d.h. einer mit einer Gauß-Funktion überlagerten Sinusfunktion, überlagert und anschließend eine Fast-Fourier-Transformation dieser überlagerten Wavelet-Verläufe durchgeführt. Aus diesem Fouriertransformierten Signal können Kennzahlen erhalten werden, die eine gute Zerlegung in Einzelkomponenten und damit eine direkte Zuordnung zu einem Fehler ermöglichen.

Zusammenfassend offenbart die vorliegende Erfindung eine Vorrichtung und ein Verfahren zur Früherkennung und Vorhersage von Aggregateschädigungen in Maschinenanlagen, insbesondere auch mobilen Maschinenanlagen. Zu diesem Zweck wird der Körperschall der Maschinenanlage durch einen Sensor erfasst und als Beschleunigungssignal ausgegeben und in einem digitalen Signalprozessor analysiert. Hierbei wird, um negative Einflüsse von Umgebungsschwingungen bzw. nicht mit dem Zustand der Maschinenanlage zusammenhängende Körperschallwellen zu vermeiden, zunächst das Beschleunigungssignal mittels einer Fast-Fourier-Transformation in den Frequenzbereich transformiert und anschließend die dadurch erhaltenen Daten mittels Cepstrum-Analyse wieder in den Zeitbereich transformiert, so dass Resonanz-Daten von Einzelstoßimpulsen (ein Cepstrum) im Zeitbereich erhalten werden. Dieses Cepstrum wird dann mit einem Vergleichscepstrum verglichen, das entsprechend Last- und Drehzahlsignalen für den gegenwärtigen Betriebszustand bei einer neuen Maschinenanlage in einer Speichereinrichtung verfügbar ist. Bei Überschreitung von Grenzwerten wird das Diagnosesignal, insbesondere Informationen über das als geschädigt diagnostizierte Aggregate und seine voraussichtliche Restlebensdauer für den Benutzer angezeigt und ein Notbetrieb eingeleitet.

## Patentansprüche

1. Vorrichtung zur Früherkennung und Vorhersage von Aggregateschädigungen in einer Maschinenanlage, mit:
mindestens einem Sensor (1) zur Erfassung von Körperschall von der zu überwachenden Maschinenanlage und Ausgabe eines Messsignals,
einer Analog-Digital-Wandlereinrichtung (7) zur Wandlung des Messsignals in ein digitales Messsignal,
einem digitalen Signalprozessor (DSP) mit Fast-Fourier-Transformationseinrichtung zur Durchführung einer Transformation des digitalen Messsignals in den Frequenzbereich,
**dadurch gekennzeichnet, dass**
in dem digitalen Signalprozessor (DSP) weiterhin eine Cepstrum-Analyseeinrichtung zur Erzeugung von Resonanzdaten von Einzelstoßimpulsen im Zeitbereich aus dem Fast-Fouriertransformierten digitalen Messsignal ausgebildet ist, und
in einer Speichereinrichtung (8) ein Muttercepstrum einer neuen Maschinenanlage für verschiedene Betriebszustände sowie eine Erfahrungswertematrix betreffend geschädigte Aggregate bzw. Aggregatteile und voraussichtlich verbleibende Lebensdauern gespeichert sind,
wobei der digitale Signalprozessor (DSP) einen Vergleich zwischen dem gegenwärtigen Cepstrum und einem ansprechend auf Drehzahl- und Lastinformationen ausgewählten, zu diesem Betriebszustand zugeordneten, aus der Speichereinrichtung (8) ausgelesenen Muttercepstrum einer neuen Maschinenanlage durchführt,
eine Überwachungseinrichtung (10) zur Überwachung des Vergleichsergebnisses von gegenwärtigem Cepstrum und zugehörigem Muttercepstrum auf Überschreitung von Grenzwerten und Information des digitalen Signalprozessors über diese Grenzwertüberschreitung ausgebildet ist, und
der digitale Signalprozessor (DSP) ansprechend auf die Information durch die Überwachungseinrichtung (10) aus dem gegenwärtigen Cepstrum anhand von in der Erfahrungswertematrix abgespeicherten Erfahrungswerten und anhand von aufgetretenen Schädigungen ein geschädigtes Aggregat bzw. Aggregateteil und dessen voraussichtlich verbleibende Lebensdauer ermittelt und ein Diagnosesignal, in dem Informationen über geschädigte Aggregate und deren voraussichtliche Restlebensdauer enthalten sind, an eine Zentraleinheit (9) zur Weiterverarbeitung ausgibt.

2. Vorrichtung nach Anspruch 1, **dadurch gekennzeichnet, dass** der digitale Signalprozessor (DSP) für die Ermittlung der voraussichtlich verbleibenden Lebensdauer eines als geschädigt erkannten Aggreates bzw. Aggregateteils in einer Speichereinrichtung (11) gespeicherte Informationen betreffend die Historie der Maschinenanlage mit berücksichtigt.

3. Vorrichtung nach Anspruch 1 oder 2, **dadurch gekennzeichnet, dass**
die Zentraleinheit (9) die im Diagnosesignal enthaltenen Informationen über geschädigte Aggregate und deren voraussichtliche Restlebensdauer auf einer Anzeigeeinrichtung für den Benutzer anzeigt und/oder per Telemetrie an eine entsprechende Werkstatt und/oder einen Maschinenanlagenbetreiber überträgt.

4. Vorrichtung nach einem der Ansprüche 1 bis 3, **dadurch gekennzeichnet, dass**
die Zentraleinheit (9) ansprechend auf das Diagnosesignal für die als geschädigt diagnostizierten Aggregate einen Notbetrieb generiert, um eine weitere Schädigung des als geschädigt diagnostizierten Aggregates zu verhindern oder zu vermindern und gleichzeitig eine weitere Verfügbarkeit der Maschinenanlage sicherzustellen.

5. Vorrichtung nach Anspruch 4, **dadurch gekennzeichnet, daß** die Zentraleinheit (9), sofern mehrere Möglichkeiten für einen Notbetrieb vorhanden sind, diese dem Benutzer zur Auswahl anzeigt, damit dieser einen Notmodus entsprechend der für ihn am besten passenden Alternative auswählen kann.

6. Vorrichtung nach einem der Ansprüche 1 bis 4, **dadurch gekennzeichnet, dass**
die Maschinenanlage ein Antriebsstrang oder eine Antriebsstrangkomponente oder eine Lenkung ist.

7. Vorrichtung nach Anspruch 6, **dadurch gekennzeichnet, dass** bei Diagnostizierung einer Getriebeschädigung im Notbetrieb der der Schädigung entsprechende Gang übersprungen wird oder die Motorleistung bzw. Motordrehzahl vermindert wird.

8. Vorrichtung nach Anspruch 6, **dadurch gekennzeichnet, dass** bei Diagnostizierung eines Defekts des Retarders als Antriebsstrangkomponente im Notbetrieb der Retarder abgeschaltet wird und die Bremsanlage seine Funktion mit übernimmt.

9. Vorrichtung nach Anspruch 6, **dadurch gekennzeichnet, dass** bei Diagnostizierung eines Defekts der Bremse als Antriebsstrangkomponente im Notbetrieb die Funktion der Bremse durch den Retarder mit übernommen wird.

10. Vorrichtung nach einem der Ansprüche 1 bis 9, **dadurch gekennzeichnet, dass**
anstelle der Cepstrum-Analyseeinrichtung eine Wavelet-Analyseeinrichtung zur Erkennung eines geschädigten Aggregates verwendet wird.

11. Verfahren zur Früherkennung und Vorhersage von Aggregateschädigungen in einer Maschinenanlage, mit den Schritten:
Erfassen von Körperschall von der zu überwachenden Maschinenanlage und Ausgeben eines Messsignals (S1),
Wandeln des Messsignals in ein digitales Messsignal (S2), Anwenden einer Fast-Fourier-Transformation auf das digitale Messsignal und dadurch Transformieren in den Frequenzbereich (S3),
**gekennzeichnet durch** die Schritte
Erzeugen von Resonanzdaten von Einzelstoßimpulsen im Zeitbereich mittels Cepstrum-Analyse (S4),
Vergleichen des gegenwärtigen Cepstrums mit einem ansprechend auf Drehzahl- und Lastinformationen ausgewählten, zu diesem Betriebszustand zugeordneten, aus einer Speichereinrichtung (8) ausgelesenen Vergleichscepstrum einer neuen Maschinenanlage (S5) **durch** einen digitalen Signalprozessor (DSP),
Überwachen des Vergleichsergebnisses von gegenwärtigem Cepstrum und zugehörigem Muttercepstrum auf Überschreitung von Grenzwerten und Informieren des digitalen Signalprozessors (DSP) über diese Grenzwertüberschreitung (S6)und Informieren des digitalen Signalprozessors (DSP) über diese Grenzwertüberschreitung, und
ansprechend auf die Information Ermitteln eines geschädigten Aggregats bzw. Aggregateteils und dessen voraussichtlich verbleibende Lebensdauer aus dem gegenwärtigen Cepstrum anhand von in einer Erfahrungswertematrix abgespeicherten Erfahrungswerten und abgespeicherten aufgetretenen Schädigungen (S7) und Ausgeben eines Diagnosesignals, in dem Informationen über geschädigte Aggregate und deren voraussichtliche Restlebensdauer enthalten sind (S8) an eine Zentraleinheit zur Weiterverarbeitung.

12. Verfahren nach Anspruch 11, **dadurch gekennzeichnet, dass** beim Ermitteln der voraussichtlich verbleibenden Restlebensdauer (S7)eines als geschädigt erkannten Aggregats bzw. Aggregateteils in einer Speichereinrichtung (11) gespeicherte Informationen betreffend die Historie der Maschinenanlage mit berücksichtigt werden.

13. Verfahren nach Anspruch nach Anspruch 11 oder 12, mit dem weiteren Schritt:
Anzeigen der im Diagnosesignal enthaltenen Informationen über geschädigte Aggregate und deren voraussichtliche Restlebensdauer für einen Benutzer (S9) und/oder Übertragen dieser Informationen per Telemetrie an eine entsprechende Werkstatt und/oder einen Maschinenanlagenbetreiber (S10).

14. Verfahren nach einem der Ansprüche 11 bis 13, mit dem weiteren Schritt
ansprechend auf das Diagnosesignal für die als geschädigt diagnostizierten Aggregate Generieren eines Notbetriebs (S13), um eine weitere Schädigung des als geschädigt diagnostizierten Aggregates zu verhindern oder zu vermindern und gleichzeitig eine weitere Verfügbarkeit der Maschinenanlage sicherzustellen.

15. Verfahren nach Anspruch 14, mit dem weiteren Schritt,
sofern mehrere Möglichkeiten für einen Notbetrieb vorhanden sind (S11), Anzeigen dieser Auswahl für den Benutzer, damit dieser einen Notmodus entsprechend der für ihn am besten passenden Alternative auswählen kann (S12).

16. Verfahren nach Anspruch 14, **dadurch gekennzeichnet, dass**,
wenn die Maschinenanlage ein Antriebsstrang ist als Notbetrieb bei einer diagnostizierten Getriebeschädigung der der Schädigung entsprechende Gang übersprungen wird oder die Motorleistung bzw. Motordrehzahl vermindert wird.

17. Verfahren nach Anspruch 14, **dadurch gekennzeichnet, dass**,
wenn die Maschinenanlage ein Antriebsstrang ist, bei Diagnostizierung eines Defekts des Retarders als Notbetrieb der Retarder abgeschaltet wird und die Bremsanlage seine Funktion mit übernimmt.

18. Verfahren nach Anspruch 14, **dadurch gekennzeichnet, dass**,
wenn die Maschinenanlage ein Antriebsstrang ist, bei Diagnostizierung eines Defekts der Bremse als Antriebsstrangkomponente im Notbetrieb die Funktion der Bremse durch den Retarder mit übernommen wird.

## Claims

1. Device for the early recognition and prediction of unit damage in a machine aggregate, with:
at least one sensor (1) for the detection of body noise from the machine aggregate to be monitored and for the output of a measurement signal,
an analog-digital converter (7) for converting the measurement signal into a digital measurement signal, and
a digital signal processor (DSP) with a Fast-Fourier transformation device for transforming the digital measurement signal in the frequency range,
**characterised in that**
the digital signal processor (DSP) also comprises a cepstrum analysis device for generating resonance data from individual impact pulses in the time range from the Fast-Fourier-transformed digital measurement signal, and a model cepstrum from a new machine aggregate for various operating conditions and an empirical value matrix relating to damaged units or parts thereof and their expected residual service life are stored in a memory device (8),
such that the digital signal processor (DSP) effects a comparison between the existing cepstrum and a model cepstrum form a new machine aggregate selected in response to speed and load information, associated with the operating condition concerned and read from the memory device (8),
a monitoring device (10) being provided for monitoring the result of comparing the existing cepstrum and the associated model cepstrum to detect whether limit values have been overstepped and to notify the digital signal processor (DSP) when such limit values have been exceeded,
and in response to such a notification by the monitoring device (10) the digital signal processor (DSP), from the existing cepstrum and with reference to empirical values stored in the empirical value matrix and to damage that has occurred previously, identifies a damaged unit or part thereof and determines its expected residual service life and emits to a central unit (9) a diagnosis signal containing information about damaged units and their expected residual service life.

2. Device according to Claim 1, **characterised in that** to determine the expected residual service life of a unit or part thereof that has been recognised as damaged, the digital signal processor (DSP) takes into consideration information concerning the history of the machine aggregate that has been stored in a memory device (11).

3. Device according to Claims 1 or 2, **characterised in that** the information concerning damaged units and their expected residual service life is displayed by the central unit (9) on a display device for the benefit of the user and/or sends it by telemetry to a corresponding workshop and/or to a machine aggregate operator.

4. Device according to any of Claims 1 to 3, **characterised in that** in response to the diagnosis signal for the unit diagnosed as damaged, the central unit (9) generates an emergency operation in order to prevent or reduce further damage to the unit diagnosed as damaged, and at the same time to ensure the continuing availability of the machine aggregate.

5. Device according to Claim 4, **characterised in that** when there are several possible emergency operation options, the central unit (9) displays them to the user for selection, so that the user can choose an emergency mode which corresponds to the alternative best suited to him.

6. Device according to any of Claims 1 to 4, **characterised in that** the machine aggregate is a drivetrain or a drivetrain component or a steering system.

7. Device according to Claim 6, **characterised in that** if damage to a transmission system is diagnosed, then in emergency operation the gear corresponding to the damage is skipped or the engine power or engine speed is reduced.

8. Device according to Claim 6, **characterised in that** if a defect of a retarder as a drivetrain component is diagnosed, then in emergency operation the retarder is disconnected and the brake unit takes over its function.

9. Device according to Claim 6, **characterised in that** if a defect of the brakes as a drivetrain component is diagnosed, than in emergency operation the function of the brakes is taken over by the retarder.

10. Device according to any of Claims 1 to 9, **characterised in that** instead of the cepstrum analysis device, a wavelet analysis device is used to recognise a damaged unit.

11. Method for the early recognition and prediction of unit damage in a machine aggregate, comprising the steps:
detection of body noise from the machine aggregate being monitored and emission of a measurement signal (S1),
conversion of the measurement signal into a digital measurement signal (S2),
application of a Fast-Fourier transformation to the digital measurement signal and thereby its transformation in the frequency range (S3),
**characterised by the steps**
generation of resonance data from individual impact pulses in the time range by means of cepstrum analysis (S4),
comparison of the existing cepstrum, by a digital signal processor (DSP), against a comparison cepstrum from a new machine aggregate (S5) selected in response to speed and load information corresponding to the operating condition concerned and read out from a memory device (8),
monitoring of the result of the comparison between the existing cepstrum and the associated model cepstrum to detect whether limit values have been overstepped, and notification of the digital signal processor (DSP) about any such overstepping of limit values (S6), and in response to the said notification,
identification of a damaged unit or part thereof and of its expected residual service life from the existing cepstrum, with reference to empirical values stored in an empirical value matrix and to damage that occurred previously (S7), and
emission of a diagnosis signal containing information about damaged units and their expected residual service life (S8), to a central unit for further processing.

12. Method according to Claim 11, **characterised in that** to determine the expected residual service life (S7) of a unit or part thereof that has been recognised as damaged, information concerning the history of the machine aggregate, stored in a memory device (11), is taken into consideration.

13. Method according to Claims 11 or 12, with the further step of displaying the information contained in the diagnosis signal concerning damaged units and their expected residual service life for the benefit of a user (S9) and/or sending this information by telemetry to a corresponding workshop and/or a machine aggregate operator (S10).

14. Method according to any of Claims 11 to 13, with the further step that in response to the diagnosis signal for the units diagnosed as damaged an emergency operation (S 13) is generated, in order to prevent or reduce further damage to the unit diagnosed as damaged and at the same time to ensure the continuing availability of the machine aggregate.

15. Method according to Claim 14, with the further step that when there are several possible emergency operation options (S 11), this selection is displayed to the user so that the user can choose an emergency mode that corresponds to the alternative best suited to him (S 12).

16. Method according to Claim 14, **characterised in that** if the machine aggregate is a drivetrain, then in the event that damage to the transmission has been diagnosed, as the emergency operation the gear corresponding to the damage is skipped or the engine power or engine speed is reduced.

17. Method according to Claim 14, **characterised in that** if the machine aggregate is a drivetrain, then in the event that a defect of the retarder is diagnosed, as the emergency operation the retarder is disconnected and the brake unit takes over its function.

18. Method according to Claim 14, **characterised in that** if the machine aggregate is a drivetrain, then in the event that a defect of the brakes as a drivetrain component is diagnosed, as the emergency operation the function of the retarder is taken over by the brakes.

## Revendications

1. Dispositif de détection précoce et de prédiction de détériorations d'unités dans une installation motrice, comprenant :
au moins un capteur (1) destiné à la détection d'un bruit de structure de l'installation motrice à surveiller et à l'émission d'un signal de mesure,
un dispositif de conversion analogique/numérique (7) destiné à la conversion du signal de mesure en un signal de mesure numérique,
un processeur de signal numérique (DSP) avec dispositif de transformation de Fourier rapide destiné à la mise en oeuvre d'une transformation du signal de mesure numérique dans le domaine fréquentiel,
**caractérisé en ce qu'**un dispositif d'analyse cepstrale est en outre réalisé dans le processeur de signal numérique (DSP) en vue de la génération de données de résonance d'impulsions de choc uniques dans le domaine temporel à partir du signal de mesure numérique obtenu grâce à la transformation de Fourier rapide et **en ce qu'**un cepstre mère d'une nouvelle installation motrice pour différents états de fonctionnement ainsi qu'une matrice de valeurs empiriques relative à des unités ou parties d'unités détériorées et des durées de vie restantes estimées sont mémorisés dans un dispositif de mémorisation (8),
dans lequel le processeur de signal numérique (DSP) effectue une comparaison entre le cepstre actuel et un cepstre mère d'une nouvelle installation motrice sélectionné en réponse aux informations de régime et de charge, associé à cet état de fonctionnement et extrait depuis le dispositif de mémorisation (8),
un dispositif de surveillance (10) est réalisé en vue de la surveillance du résultat de comparaison du cepstre actuel et du cepstre mère correspondant quant au dépassement de valeurs limites et en vue de l'information du processeur de signal numérique concernant ce dépassement de valeur limite et
le processeur de signal numérique (DSP) détermine, en réponse à l'information par le dispositif de surveillance (10), une unité ou partie d'unité détériorée et sa durée de vie restante estimée à partir du cepstre actuel au moyen de valeurs empiriques mémorisées dans la matrice de valeurs empiriques ainsi qu'au moyen de détériorations survenant et émet un signal de diagnostic dans lequel sont contenues des informations concernant des unités détériorées et leur durée de vie restante estimée à une unité centrale (9) en vue du traitement ultérieur.

2. Dispositif selon la revendication 1, **caractérisé en ce que** le processeur de signal numérique (DSP) pour la détermination de la durée de vie restante estimée d'une unité ou partie d'unité identifiée comme détériorée tient compte d'informations mémorisées dans un dispositif de mémorisation (11) relatives à l'historique de l'installation motrice.

3. Dispositif selon la revendication 1 ou 2, **caractérisé en ce que** l'unité centrale (9) affiche les informations contenues dans le signal de diagnostic concernant des unités détériorées et leur durée de vie restante estimée sur un dispositif d'affichage pour l'utilisateur et/ou les transmet par télémétrie à un atelier correspondant et/ou un exploitant d'installation motrice.

4. Dispositif selon l'une quelconque des revendications 1 à 3, **caractérisé en ce que** l'unité centrale (9) génère, en réponse au signal de diagnostic pour les unités diagnostiquées comme détériorées, un régime de secours afin d'empêcher ou d'atténuer une nouvelle détérioration de l'unité diagnostiquée comme détériorée et de garantir en même temps une remise en disponibilité de l'installation motrice.

5. Dispositif selon la revendication 4, **caractérisé en ce que**, dans la mesure où plusieurs possibilités sont disponibles pour un régime de secours, l'unité centrale (9) affiche ces dernières à l'utilisateur en vue de la sélection afin que celui-ci puisse sélectionner un mode de secours en fonction de l'alternative la mieux adaptée pour lui.

6. Dispositif selon l'une quelconque des revendications 1 à 4, **caractérisé en ce que** l'installation motrice est une ligne d'entraînement ou un composant de ligne d'entraînement ou une direction.

7. Dispositif selon la revendication 6, **caractérisé en ce que** la vitesse correspondant à la détérioration est sautée ou la puissance du moteur ou le régime du moteur est diminué lors du diagnostic d'une détérioration de la boîte de vitesses dans le régime de secours.

8. Dispositif selon la revendication 6, **caractérisé en ce que** le ralentisseur est coupé et l'équipement de freinage assume sa fonction lors du diagnostic d'un défaut du ralentisseur en tant que composant de la ligne d'entraînement dans le régime de secours.

9. Dispositif selon la revendication 6, **caractérisé en ce que** la fonction du frein est assumée par le ralentisseur lors du diagnostic d'un défaut du frein en tant que composant de la ligne d'entraînement dans le régime de secours.

10. Dispositif selon l'une quelconque des revendications 1 à 9, **caractérisé en ce qu'**un dispositif d'analyse par ondelettes destiné à l'identification d'une unité détériorée est utilisé à la place du dispositif d'analyse cepstrale.

11. Procédé de détection précoce et de prédiction de détériorations d'unités dans une installation motrice, comprenant les étapes suivantes :
détection du bruit de structure de l'instillation motrice à surveiller et émission d'un signal de mesure (S1),
conversion du signal de mesure en un signal de mesure numérique (S2),
application d'une transformation de Fourier rapide au signal de mesure numérique et, de cette manière, transformation dans le domaine fréquentiel (S3),
**caractérisé par** les étapes suivantes :
génération de données de résonance d'impulsions de choc uniques dans le domaine temporel au moyen d'une analyse cepstrale (S4),
comparaison par un processeur de signal numérique (DSP) du cepstre actuel avec un cepstre de comparaison d'une nouvelle installation motrice (S5) sélectionné en réponse aux informations de régime et de charge, associé à cet état de fonctionnement et extrait depuis un dispositif de mémorisation (8),
surveillance du résultat de comparaison du cepstre actuel et du cepstre mère correspondant quant au dépassement de valeurs limites et information du processeur de signal numérique (DSP) concernant ce dépassement de valeur limite (S6) et
détermination, en réponse à l'information, d'une unité ou partie d'unité détériorée et sa durée de vie restante estimée à partir du cepstre actuel au moyen de valeurs empiriques mémorisées dans une matrice de valeurs empiriques et de détériorations mémorisées survenant (S7) et émission d'un signal de diagnostic dans lequel sont contenues des informations concernant des unités détériorées et leur durée de vie restante estimée (S8) à une unité centrale en vue du traitement ultérieur.

12. Procédé selon la revendication 11, **caractérisé en ce que** des informations mémorisées dans un dispositif de mémorisation (11) relatives à l'historique de l'installation motrice sont prises en considération lors de la détermination de la durée de vie restante estimée (S7) d'une unité ou partie d'unité identifiée comme détériorée.

13. Procédé selon la revendication 11 ou 12, comportant la nouvelle étape suivante :
affichage des informations contenues dans le signal de diagnostic concernant des unités détériorées et leur durée de vie restante estimée pour un utilisateur (S9) et/ou transmission de ces informations par télémétrie à un atelier correspondant et/ou un exploitant d'installation motrice (S10).

14. Procédé selon l'une quelconque des revendications 11 à 13, comportant la nouvelle étape suivante :
génération d'un régime de secours (S13) en réponse au signal de diagnostic pour les unités diagnostiquées comme détériorées afin d'empêcher ou d'atténuer une nouvelle détérioration de l'unité diagnostiquée comme détériorée et de garantir en même temps une remise en disponibilité de l'installation motrice.

15. Procédé selon la revendication 14, comportant la nouvelle étape suivante :
dans la mesure où plusieurs possibilités sont disponibles pour un régime de secours (S11), affichage de cette sélection pour l'utilisateur afin que celui-ci puisse sélectionner un mode de secours en fonction de l'alternative la mieux adaptée pour lui (S12).

16. Procédé selon la revendication 14, **caractérisé en ce que**, si l'installation motrice est une ligne d'entraînement, la vitesse correspondant à la détérioration est sautée ou la puissance du moteur ou le régime du moteur est diminué en tant que régime de secours dans le cas d'une détérioration de la boîte de vitesse diagnostiquée.

17. Procédé selon la revendication 14, **caractérisé en ce que**, si l'installation motrice est une ligne d'entraînement, le ralentisseur est coupé et l'équipement de freinage assume sa fonction en cas de diagnostic d'un défaut du ralentisseur en tant que régime de secours.

18. Procédé selon la revendication 14, **caractérisé en ce que**, si l'installation motrice est une ligne d'entraînement, la fonction du frein est assumée par le ralentisseur en cas de diagnostic d'un défaut du frein en tant que composant de la ligne d'entraînement dans le régime de secours.
